Europäisches Patentamt

European Patent Office

Office européen des brevets

(11) Veröffentlichungsnummer: **0 011 753**
A1

(12) **EUROPÄISCHE PATENTANMELDUNG**

(21) Anmeldenummer: **79104411.8**

(22) Anmeldetag: **09.11.79**

(51) Int. Cl.³: **E 04 B 1/76**
**E 04 B 1/78**

(30) Priorität: **22.11.78 DE 2850532**

(43) Veröffentlichungstag der Anmeldung:
**11.06.80 Patentblatt 80/12**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Weber, Heinz, Dr. Dipl.-Chem.**
**Am Wehrhaus 26**
**D-6718 Gruenstadt 1(DE)**

(72) Erfinder: **Jarre, Wolfgang, Dr. Dipl.-Chem.**
**Limesstrasse 3**
**D-6700 Ludwigshafen(DE)**

(72) Erfinder: **Mahnke, Harald, Dr. Dipl.-Chem.**
**Osloer Weg 48**
**D-6700 Ludwigshafen(DE)**

(54) Verfahren zum thermischen Isolieren von Gebäudeteilen.

(57) Verfahren zum thermischen Isolieren von Dächern, Decken und Wänden von Gebäuden durch Einbringen von Dämmstoff-Bahnen zwischen Rahmenkonstruktionen. Als Dämmstoff wird ein Polyurethan-Weichschaum verwendet, der mit einer Kunststoff-Folie kaschiert ist. Der Polyurethan-Schaumstoff enthält vorzugsweise Melamin als Flammschutzmittel, die Kunststoff-Folie besteht vorzugsweise aus Polybutylenterephthalat.

EP 0 011 753 A1

BASF Aktiengesellschaft                    O. Z.  0050/033533

## Verfahren zum thermischen Isolieren von Gebäudeteilen

Die Erfindung betrifft ein Verfahren zum thermischen Isolieren von Dächern, Decken und Wänden von Gebäuden durch Einbringen von Dämmstoff-Bahnen zwischen Rahmenkonstruktionen.

Zur Isolierung von Gebäudeteilen, insbesondere von Dächern, gegen den Einfluß von Wärme und Kälte bringt man zwischen Holzsparren oder andere tragende Rahmenkonstruktionen Dämmstoffe ein. Als Materialien verwendet man dafür üblicherweise harte Schaumstoffe oder kunstharzgebundene Mineralfasern, die mit einer Aluminiumfolie als Wasserdampfsperre kaschiert sind. Harte Schaumstoffe, z.B. auf Polystyrol- oder Polyurethan-Basis stehen nur als starre Platten und nicht als rollbare Bahnen zur Verfügung, sie sind auch schwierig zwischen die Dachsparren einzubringen, da diese in der Regel keine einheitlichen und gleichmäßigen Abstände von einander haben. Die Schaumstoffplatten müssen daher jeweils individuell zurechtgeschnitten werden.

Polyurethan-Weichschaum wird in der Hauptsache als Polstermaterial verwendet; für Spezialzwecke, z.B. zur Rohrummantelung, werden auch seine Isolier-Eigenschaften ausgenützt. Zum thermischen Isolieren von Gebäudeteilen ist

Dd/BL

BASF Aktiengesellschaft
-2-
O.Z. 0050/033533

0011753

bisher jedoch Polyurethan-Weichschaum, insbesondere wegen seiner Offenzelligkeit, noch nicht vorgeschlagen und verwendet worden. In der DE-OS 28 09 084 wird zwar erwähnt, daß flammgeschützte Polyurethan-Schaumstoffe u.a. als Wärmeisolationsmaterial verwendet werden können; es sind dort aber praktisch nur geschlossenzellige, starre Hartschäume beschrieben und keine offenzelligen Weichschäume. Der Erfindung lag die Aufgabe zugrunde, ein Verfahren zum thermischen Isolieren von Dächern, Decken und Wänden von Gebäuden durch Einbringen von Dämmstoff-Bahnen zwischen Rahmenkonstruktionen zu entwickeln, bei dem der zu verwendende Dämmstoff folgende Eigenschaften in sich vereinigen sollte: Er sollte einfach und billig herzustellen sein, leicht und unproblematisch handzuhaben und zu verlegen sein und an den Rahmenkonstruktionen gut befestigt werden können. Ferner sollte er aufrollbar sowie flexibel und reversibel deformierbar sein, eine gute Wärmedämmwirkung und eine geringe Wasserdampfdurchlässigkeit aufweisen. Die Dämmstoffe sollten möglichst schwer nach DIN 4102 entflammbar sein, auf keinen Fall dürfen sie leicht entflammbar sein.

Diese Aufgabe wird erfindungsgemäß dadurch gelöst, daß man als Dämmstoff einen Polyurethan-Weichschaum verwendet, der mit einer Kunststoff-Folie kaschiert ist.

Die erfindungsgemäßen Schaumstoffe liegen als Bahnen vor, die aufgerollt werden können. Die Breite der Bahnen ist zweckmäßigerweise so dimensioniert, daß sie etwas größer ist als die lichte Weite der Rahmenkonstruktion. Die Bahnen werden beim Verlegen abgerollt, in Querrichtung etwas zusammengepreßt und dann zwischen die Rahmenkonstruktionen eingebracht. Da der Schaumstoff reversibel deformierbar ist, versucht er, seine ursprüngliche Form wieder anzunehmen. Er paßt sich also dicht zwischen die Rahmenkonstruktion ein und gleicht dadurch Unregelmäßigkeiten in den Abständen aus, so daß sich keine Wärmebrücken ausbilden können. Die Schaumstoffbahn wird durch die Rückstellkräfte zwischen den Dachsparren gehalten. Zusätzlich kann sie mittels der seitlich überstehenden Kaschierfolie noch durch Stichnägel oder durch eine Lattenkonstruktion an den Holzsparren fixiert werden. Die Dämmstoffbahnen haben zweckmäßigerweise eine Dicke von 3 bis 15, insbesondere von 5 bis 10 cm und eine Breite von 40 bis 150, insbesondere von 50 bis 80 cm.

Der erfindungsgemäße Dämmstoff ist ein offenzelliger Polyurethan-Weichschaum, der vorzugsweise 5 bis 30 Gew.% eines Flammschutzmittels enthält.

Das Polyurethan wird hergestellt durch Umsetzung von aliphatischen oder aromatischen Polyisocyanaten mit Polyolen. Als Polyisocyanate kommen z.B. in Frage: Toluylendiisocyanat (TDI), Diphenylmethan-diisocyanat (MDI), phosgenierte Anilin-Formaldehyd-Addukte, die gegebenenfalls hydriert sein können, Hexamethylen-diisocyanat, Isophoron-diisocyanat oder Gemische davon. Vorzugsweise verwendet man eine Mischung aus den Diphenylmethandiisocyanat-Isomeren und Polyphenyl-Polymethylen-Polyisocyanaten mit einem Gehalt an Diphenylmethan-diisocyanaten von 40 bis 90, insbesondere von 45 bis 65 Gewichtsprozent (Roh-MDI). Ferner ist eine Mischung aus TDI und Roh-MDI im Gewichtsverhältnis von 90 : 10 bis 10 : 90, insbesondere von 70 : 30 bis 50 : 50 gut geeignet.

Als Polyole kommen insbesondere polyfunktionelle, vorzugsweise di- oder tri-funktionelle Polyesterole und insbesondere Polyätherole mit Molekulargewichten zwischen 750 und 7 500, vorzugsweise von 2.000 bis 5 000, in Betracht. Verwendet werden können jedoch auch andere, im wesentlichen lineare Hydroxylgruppen-haltige Polymere mit den genannten Molekulargewichten, beispielsweise Polycarbonate. Die OH--Zahl der Polyole soll vorzugsweise unter 100, insbesondere zwischen 20 und 70, liegen.

Zur Herstellung von Polyurethan-Weichschäumen mit besonderen mechanischen Eigenschaften kann es zweckmäßig sein, neben den Polyolen zusätzlich difunktionelle Kettenverlängerungsmittel oder höherfunktionelle Vernetzer mitzuverwenden. Dabei kommen insbesondere aliphatische Diole mit 2 bis 6 Kohlenstoffatomen in Betracht, beispielsweise Äthylenglykol, Butandiol-1,4 oder Hexandiol-1,6.

Als Treibmittel wird Wasser verwendet, welches mit dem Isocyanatgemisch reagiert und Kohlendioxid liefert. Vorzugsweise werden 2 bis 6 Gewichtsprozent, insbesondere 2,6 bis 4,5 Gewichtsprozent Wasser, bezogen auf das Gewicht des Polyols, eingesetzt. Anstelle von Wasser allein können auch Mischungen aus Wasser und chemisch inerten, niedrigsiedenden, gegebenenfalls halogenierten Kohlenwasserstoffen als Treibmittel angewandt werden, z.B. $CHCl_3$, $CFCl_3$, $CF_2Cl_2$ oder $CF_3Cl$. Das Raumgewicht des Polyurethanschaums wird zweckmäßigerweise so eingestellt, daß es zwischen 10 und 100, vorzugsweise zwischen 15 und 40 g/l liegt.

Dem schaumfähigen Reaktionsgemisch können ferner Katalysatoren, die die Polyurethanbildung beschleunigen, z.B. tertiäre Amine und organische Zinnsalze, sowie gegebenenfalls andere Zusatzstoffe, die üblicherweise zur Herstellung von Polyurethan-Weichschaumstoffen Anwendung finden, einverleibt werden. Dabei kommen beispielsweise oberflächenaktive Stoffe, Porenregler, Antioxidationsmittel, Hydrolysenschutzmittel, Farbstoffe oder Füllstoffe in Betracht.

0011753

Wenn der Polyurethanschaum schwer entflammbar ausgerüstet werden soll, dann setzt man ihm übliche Flammschutzmittel auf Basis von Halogen-, Phosphor- oder vorzugsweise Stickstoff-Verbindungen zu. Besonders geeignet sind Cyansäurederivate, beispielsweise Cyanamid, Dicyanamid, Guanidin, insbesondere Guanidinsalze, Diguanid und Cyanursäure sowie deren Derivate, wie Cyanursäurealkylester und Cyanursäureamide, wie Melamin und dessen Kondensationsprodukt mit 1 bis 6 Mol Formaldehyd pro Mol Melamin. Besonders bewährt und daher vorzugsweise zur Anwendung kommen die Handelsprodukte Dicyanamid und insbesondere Melamin. Die Cyansäurederivate werden der schaumfähigen Polyurethanmischung vorzugsweise in Mengen von 10 bis 90 Gewichtsprozent, insbesondere von 30 bis 70 Gewichtsprozent, bezogen auf das Gewicht der Polyisocyanate, einverleibt.

Derartige schwer entflammbare Polyurethan-Weichschäume sind z.B. in der deutschen Patentanmeldung P 28 15 544 beschrieben. Sie zeichnen sich dadurch aus, daß im Brandfall keine Phosphor- oder Halogenwasserstoff-Verbindungen entstehen.

Die erfindungsgemäßen Polyurethan-Weichschaumstoffe können nach dem Präpolymer- und vorzugsweise nach den one shot-Verfahren hergestellt werden.

Erfolgt die Herstellung der Polyurethan-Weichschaumstoffe nach dem one shot-Verfahren, so wird üblicherweise eine Mischung aus Polyol, Cyansäurederivat, Wasser, Katalysator und gegebenenfalls Kettenverlängerungsmittel und Zusatzstoffe mit der Polyisocyanatmischung bei Temperaturen von 15 bis 60°C, vorzugsweise von 25 bis 40°C, in solchen Mengen zur Umsetzung gebracht, daß das Verhältnis sämtlicher Zerewitinoff-aktiver Wasserstoffatome zu NCO-Gruppen ungefähr 0,8 bis 1,2 zu 1, vorzugsweisw 0,95 bis 1,05 zu 1 ist. Die reaktiven Gruppen der Cyansäurederivate, z.B.

die Amingruppen des Melamins sind hierbei nicht berücksichtigt. Sofern die Flammschutzmittel NH-Gruppen besitzen, sind diese in den genannten Mengenverhältnissen nicht berücksichtigt. Bei Verwendung einer Mischkammer mit mehreren Zulaufdüsen können die flüssigen Ausgangsstoffe einzeln oder, sofern die Komponenten fest sind, in Form von Lösungen oder Suspensionen zugeführt und in der Mischkammer intensiv vermischt werden. Als besonders zweckmäßig hat es sich jedoch erwiesen, nach dem Zweikomponenten-Verfahren zu arbeiten und die Mischung aus Polyol, Cyansäurederivat, Wasser, Katalysator, gegebenenfalls Kettenverlängerungsmittel und Zusatzstoffe zu der Komponente A zu vereinigen und als Komponente B die erfindungsgemäße Polyisocyanatmischung zu verwenden.

Zur Herstellung der NCO-Gruppen-haltigen Präpolymeren wird die Polyisocyanatmischung mit den Polyolen und Kettenverlängerungsmitteln in solchen Mengen zur Umsetzung gebracht, daß das Verhältnis von NCO-Gruppen zu Gesamthydroxyl 10 : 1 bis 95 : 1, vorzugsweise 70 : 1 bis 90 : 1, beträgt. Die erhaltenen Präpolymeren werden anschließend mit Cyansäurederivaten, Wasser oder Mischungen aus Wasser und niedrigsiedenden, gegebenenfalls zusätzlichen Polyolen und/oder Kettenverlängerungsmitteln und Zusatzstoffen gemischt und aufschäumen lassen.

Die erfindungsgemäß verwendeten Dämmstoff-Bahnen bestehen aus dem Polyurethan-Weichschaum, der mit einer Kunststoff-Folie kaschiert ist. Die Folie dient vor allem als Dampfsperre gegen das Eindringen von Wasserdampf. Außerdem verleiht sie der Dämmstoff-Bahn eine erhöhte Festigkeit. Zweckmäßigerweise steht sie beidseitig etwa 3 bis 15 cm über den Rand der Bahn über und bietet so eine Möglichkeit, den Dämmstoff an den Rahmenkonstruktionen zu befestigen. Aus diesem Grund ist es notwendig, daß die Folie eine gute

0011753

Reißfestigkeit, insbesondere Kanteneinreißfestigkeit und Weiterreißfestigkeit aufweist. Ferner soll sie eine gute Haftung zum Polyurethan-Schaumstoff haben. Schließlich spielt auch ihre Brennbarkeit eine Rolle. Da die Dämmstoffbahnen nach DIN 4102 normal entflammbar sein sollen, darf dieses Brandverhalten vom Folienmaterial nicht beeinträchtigt werden.

Vorzugsweise soll die Folie daher folgende Eigenschaften aufweisen: Ihre Dichte soll zwischen 20 und 250 $\mu$m, insbesondere zwischen 30 und 100 $\mu$m, liegen, ihre Wasserdampfdurchlässigkeit unter 25 $g/m^2.d$, insbesondere unter 10 $g/m^2.d$, ihre Reißfestigkeit soll höher als 10 $N/mm^2$, insbesondere höher als 25 $N/mm^2$, sein und sie soll nach DIN 4102 normal oder schwer entflammbar sein. Es hat dabei sich überraschenderweise gezeigt, daß Kunststoffe, die für sich allein normal entflammbar sind, z.B. Polybutylenterephthalat in Kombination mit dem flammfest ausgerüsteten Polyurethan-Weichschaum einen schwer entflammbaren Dämmstoff ergeben.

Bei der Wahl des Materials für die Kaschier-Folie lag es nun nahe, die Erfahrungen bei den bisher üblichen, mit Folien kaschierten Mineralfaser-Bahnen zu benützten. Es hat sich aber gezeigt, daß die dort üblicherweise verwendete Aluminiumfolie allein keine genügende Fertigkeit der Dämmstoff-Bahn ergibt; nimmt man einen Verbund aus Kraftpapier und Aluminium, so erhöht sich zwar die Festigkeit der erhaltene Dämmstoff ist aber leicht entflammbar und somit als Isoliermaterial für Gebäudeteile nicht geeignet.

Überraschenderweise wurde nun gefunden, daß sich das Problem lösen läßt, wenn man erfindungsgemäß Kunststoff-Folien verwendet. Es ist zwar schon verschiedentlich vorgeschlagen worden, Polyurethan-Schaumstoffe zu kaschie-

0011753

ren, wobei auch Kunststoff-Folien eingesetzt wurden; das Kaschieren von Polyurethan-Weichschaum, der zur Isolierung von Gebäudeteilen verwendet wird, war bisher jedoch nicht bekannt.

Die Kunststoff-Folien sollen vorzugsweise die oben genannten Eigenschaften aufweisen. Als Kunststoffe eignen sich insbesondere lineare Polyester, wie Polybutylenterephthalat und Polyäthylenterephthalat, Polyamide, thermoplastische Polyurethane sowie flammfest (mit organischen Bromverbindungen) ausgerüstete Polyolefine, wie Polyäthylen und Polypropylen. Zur Erhöhung der Haftung am Polyurethan-Schaumstoff können die Polyolefin-Folien einer Korona-Entladung unterworfen werden. Besonders bevorzugt ist Polybutylenterephthalat einer relativen Viskosität von 1,45 bis 1,7 (gemessen in einem Gemisch Phenol/o-Di-chlorbenzol im Gewichtsverhältnis 3 : 2 bei 25°C). Geeignet sind grundsätzlich auch Styrolpolymerisate, Vinylchloridpolymerisate und Olefinpolymerisate.

Zur Erniedrigung der Wasserdampfdurchlässigkeit kann die Kunststoff-Folie noch mit einer Aluminiumschicht überzogen sein. Man kann sie beispielsweise mit einer Aluminiumfolie einer Dichte von etwa 5 bis 20 µm kaschieren; vorteilhaft wird die Kunststoff-Folie aber durch Bedampfen metallisiert, wodurch sie eine bis zu 0,4 µm dicke Aluminiumschicht erhält.

Die Herstellung der Dämmstoff-Bahnen kann diskontinuierlich oder kontinuierlich erfolgen. So kann man beispielsweise den Polyurethan-Weichschaum in großen Blockschaumanlagen herstellen, die Bahnen zurechtschneiden und mit der Folie kaschieren, wobei übliche Haftvermittler oder Klebstoffe, z.B. Polyurethankleber, eingesetzt werden. In einer besonders günstigen Ausführungsform wird der Poly- urethan-Schaum kontinuierlich auf einer Doppelbandanlage zwischen zwei Deckschichten aufgeschäumt; wobei ohne weitere Maßnahmen ein fester Verbund von Schaum und Folie entsteht. Dabei können auch versteifende Elemente, z.B. aus Hartschaum, vorzugsweise quer zur Bahnrichtung, in den Schaumstoff eingebracht werden, wodurch die Biegesteifigkeit der Dämmstoff-Bahnen erhöht werden kann. Die Dicke des Schaums wird so eingestellt, daß sie doppelt so groß wie die gewünschte Dicke der Dämmstoff-Bahn ist. Durch geeignete Säge- oder Schneideinrichtungen wird der Verbund so aufgeteilt, daß zwei Dämmstoff-Bahnen mit der gewünschten Dicke und einseitigen Kaschierung erhalten werden. Durch zusätzliche Maßnahmen können die seitlich überstehenden Randstreifen der Folie geknickt, gefaltet und gegebenenfalls verstärkt werden. Die so hergestellten Dämmstoffbahnen werden schließlich in einer geeigneten Länge, z.B. 3 bis 20 m, abgelängt und zu einer Rolle gewickelt. Sie können dann ohne Schwierigkeiten gelagert und transportiert werden, und eignen sich hervorragend als leicht handhabbares, flexibles Isoliermaterial für Gebäudeteile.

Die in den Beispielen genannten Teile und Prozente beziehen sich auf das Gewicht.

Beispiele

I. Herstellung der Schäume

In zwei getrennten Gefäßen wurde einerseits die Isocyanat-Komponente und andererseits eine Mischung aus Polyol, Hilfsmitteln und Treibmittel bereitgestellt. Folgende Ausgangsstoffe wurden eingesetzt:

Isocyanate:

Roh-MDI 1:     Phosgeniertes Anilin-Formaldehyd-Umset-
               zungsprodukt mit einem Gehalt an Diphenyl-
               methandiisocyanat von 40 bis 45 %, Viskosi-
               tät 200 mPas; NCO-Gehalt 31 %,

Roh-MDI 2:     mit 5 % eines oligomeren Propylenglykols
               (mittlerer Polymerisationsgrad 3) modifizier-
               tes Roh-MDI 1, Gehalt an Diphenylmethandi-
               isocyanat etwa 65 %, Viskosität 140 mPas,
               NCO-Gehalt 28,6 %,

TDI:           Toluylendiisocyanat mit einem Verhältnis
               der Isomeren 2,4 : 2,6 = 80 : 20,

Polyole

Polyätherdiol: Gehalt von etwa 85 % primären OH-Gruppen,
               OH-Zahl 28, Viskosität 750 mPas,

Polyäthertriol: Gehalt von etwa 80 % primären OH-Gruppen,
               OH-Zahl 26, Viskosität 1275 mPas.

Katalysatoren:

Kat. 1: ® Desmorapid PV der BAYER AG )
Kat. 2: ® Niax A 1 der UCC           ) Basis:
Kat. 3: ® Dabco 33 LV von Hondry     ) tert. Amine
Kat. 4: Dimethylcyclohexylamin
Kat. 5: Pentamethyldiäthylentriamin
Kat. 6: Dibutylzinndilaurat

0011753

Stabilisator:

Verwendet wurde als üblicher Kaltschaum-Stabilisator
® Tegostab B 4690 der Goldschmidt AG auf Basis eines Polysiloxan-Polyäther-Blockcopolymeren mit einem Molekulargewicht unter 3 000 und einem Gehalt an Si-Einheiten von
weniger als 20 %.

Als Flammschutzmittel wurde Melamin eingesetzt; als Treibmittel Wasser sowie zusätzlich Trichlorfluormethan.

Aus der Tabelle 1 sind die Rezepturen (Gewichtsteile) ersichtlich:

Tabelle 1

| Schaum | A | B | C | D | E |
|---|---|---|---|---|---|
| Roh-MDI 1 | 1 500 | 856 | - | 357 | 1 500 |
| Roh-MDI 2 | - | - | 633 | - | - |
| TDI | 375 | 856 | 1 175 | 663 | 375 |
| Polyätherdiol | 3 500 | 4 200 | 800 | 2 400 | 3 500 |
| Polyäthertriol | - | - | 3 200 | - | - |
| Kat. 1 | 10 | 8,4 | - | - | 10 |
| Kat. 2 | - | 8,4 | - | - | - |
| Kat. 3 | - | 8,4 | - | - | - |
| Kat. 4 | 25 | - | - | - | 25 |
| Kat. 5 | - | - | 35 | 19 | - |
| Kat. 6 | 1,5 | | | | 1,5 |
| Stabilisator | 10 | 40 | 20 | 12 | 10 |
| Melamin | 1 250 | 1 530 | 1 400 | 860 | - |
| Wasser | 125 | 126 | 160 | 72 | 125 |
| Trichlorfluor-methan | 1 000 | 1 260 | 800 | 720 | 1 000 |

Der Schaum E ist nicht erfindungsgemäß, er unterscheidet sich von dem Schaum A dadurch, daß er kein Flammschutzmittel enthält.

Zur Messung der Schäume auf ihre Brandeigenschaften wurden in einem Vorversuch die beiden Komponenten zusammengebracht, mit einem hochtourigen Rührer (1 500 Umdrehungen pro Minute) vermischt, die Mischung in einer offenen Form geschäumt und 15 Minuten ausgehärtet. Der entstandene Schaum wurde mechanisch gewalkt, und es werden 8 cm starke Proben für den Brandschacht-Test nach DIN 4102 herausgeschnitten. Dabei ergab sich, daß die Schäume A – D als schwer entflammbar einzustufen sind, während der Schaum E abbrennt.

II. Folien

Folgende Folien wurden eingesetzt:

a) LDPE: Polyäthylen niedriger Dichte (0,97 g/cm$^3$), Schmelzindex MFI 190/2,16 von 1,7 - 2,3 g/10 min (DIN 53 735), flammfest ausgerüstet mit einem Flammschutzmittel auf Basis Chlorparaffin:Antimontrioxid, mit Corona-Entladung vorbehandelt.

b) PA: Polycaprolactam mit einer relativen Viskosität von 3,25 und einer Dichte von 1,3 g/cm$^3$, durch Bedampfen mit einer etwa 0,1 /um dicken Aluminium-Schicht metallisiert.

c) PBT: Polybutylenterephthalat mit einer relativen Viskosität von 1,5 bis 1,7 und einer Dichte von 1,3 g/cm$^3$, durch Bedampfen mit einer etwa 0,1 /um dicken Aluminium-Schicht metallisiert.

d) Kraftpapier: Flächengewicht von 100 g/m$^2$, mit einer 9 um dicken Aluminiumfolie kaschiert.

Tabelle 2 zeigt die Eigenschaften der Folien:

Tabelle 2

| Folie | a | b | c | d |
|---|---|---|---|---|
| Dicke in um | 150 | 80 | 30 | 120 |
| Reißfestigkeit in N/mm$^2$ nach DIN 53 355 | | | | |
| quer | 20 | 50 | 65 | 50 |
| längs | 20 | 50 | 65 | 95 |
| Reißdehnung in % nach DIN 53 455 | | | | |
| quer | 250 | 500 | 500 | 2,3 |
| längs | 450 | 500 | 500 | 1,9 |
| Wasserdampfdiffusions-widerstandsfaktor u nach DIN 53 422 | 550 000 | 40 000 | 750 000 | |
| Brandverhalten nach DIN 4102 | normal entflamm-bar | normal entflamm-bar | normal entflamm-bar | leicht ent-flamm-bar |

III. Herstellung der Dämmstoffe und Anwendung

Beispiel 1

In oben offenen Kasten-Formen mit der Grundfläche 60 x 150 cm und der Höhe 30 cm werden auf den Boden verschiedene Folien a - d eingelegt. 7 kg der Polyurethan-Ausgangsstoffe (Rezepturen A - C) wurden verrührt und in die Formen gegeben. Die Mischungen schäumten, härteten aus und hafteten ohne weitere Maßnahme fest an den eingelegten Folien. Aus dem Schaumstoffblöcken wurden Dämmstoff-Bahnen verschiedener Dichte herausgeschnitten.

Tabelle 3 zeigt deren Eigenschaften.

Tabelle 3

| Versuch | 1 | 2 | 3 | 4 |
|---|---|---|---|---|
| Schaum | A | B | C | C |
| Folie | a | b | c | d |
| Dicke der Bahn in mm | 50 | 60 | 80 | 80 |
| Raumgewicht in g/l | 27 | 24 | 22,5 | 23 |
| Wärmeleitzahl in W/m$\cdot$K nach DIN 52 612 | 0,038 | 0,039 | 0,037 | 0,036 |
| Brandverhalten nach DIN 4102 | schwer entflammbar | schwer entflammbar | schwer entflammbar | leicht entflammbar |

Im Vergleichsversuch 4 wurde ein nicht erfindungsgemäßer Dämmstoff aus dem Schaum C und Aluminium-beschichtetem Kraftpapier (Folie d) hergestellt. Der Dämmstoff ist leicht entflammbar und daher als Baustoff nicht geeignet.

Beispiel 2

Auf einem kontinuierlich laufenden, 60 cm breiten Doppelband, welches mit seitlichen Stützbändern versehen ist, wurde oben und unten an den Bändern entlang im Abstand von 16 cm PBT-Folien c geführt. Aus einem oszillierenden Mischkopf, der mit einer üblichen Hochdruck-Schäummaschine verbunden ist, wurde kontinuierlich auf die untere Folienbahn die Polyurethan-Mischung D aufgetragen. Der Schaum begann nach 2 bis 3 sec. zu steigen, er wurde durch den Vortrieb der Folienbahn zwischen die Stützbänder transportiert. Nach 50 bis 60 sec. war das Gemisch soweit aufgeschäumt, daß die oben laufende Folie vom Schaum an das obere Stützband gedrückt und mit dem Schaum verbunden wurde. Nach etwa 2 Minuten verließ der entstehende doppelte Verbund die Doppelbandanlage, wurde gewalkt und horizontal gesägt. Auf diese Weise wurden in einem Verfahrensschritt 2 einseitig kaschierte, rollbare Dämmbahnen erhalten. Die Folienbreite wurde so gewählt, daß sie auf beiden Seiten je 6 cm über den Schaum übersteht.

Der Dämmstoff hat folgende Eigenschaften:

Dicke:              80 mm:
Raumgewicht:        22 g/l
Wärmeleitzahl:      0,036 $W/^{o}K.m$

Brandverhalten: schwer entflammbar.

Die Dämmbahnen wurden auf 6 m abgelängt und zu verlegefertigen Rollen aufgewickelt. In einem Praxistest wurden diese Dämmbahnen zwischen zwei Dachsparren mit einem Abstand von etwa 57 cm zu Isolierzwecken verlegt. Dabei wurde der elastische Schaum fest zwischen die Dachsparren gepreßt, so daß sich keine Wärmebrücken ausbilden können. Die Bahn wurde mittels der überstehenden Folie an den Sparren befestigt.

0011753

## Patentansprüche

1. Verfahren zum thermischen Isolieren von Dächern, Decken und Wänden von Gebäuden durch Einbringen von Dämmstoff-Bahnen zwischen Rahmenkonstruktionen, dadurch gekennzeichnet, daß als Dämmstoff ein Polyurethan-Weichschaum verwendet wird, der mit einer Kunststoff-Folie kaschiert ist.

2. Verfahren zum thermischen Isolieren nach Anspruch 1, dadurch gekennzeichnet, daß die Dämmstoff-Bahnen eine Dicke von 3 bis 15, vorzugsweise 5 bis 10 cm haben.

3. Verfahren zum thermischen Isolieren nach Anspruch 1, dadurch gekennzeichnet, daß die Dämmstoff-Bahnen eine Breite von 40 bis 150, vorzugsweise von 50 bis 80 cm haben.

4. Verfahren zum thermischen Isolieren nach Anspruch 1, dadurch gekennzeichnet, daß der Polyurethan-Weichschaum ein Raumgewicht zwischen 10 und 100, vorzugsweise zwischen 20 und 40 g pro Liter hat.

5. Verfahren zum thermischen Isolieren nach Anspruch 1, dadurch gekennzeichnet, daß der Dämmstoff nach DIN 4102 schwer entflammbar ist.

6. Verfahren zum thermischen Isolieren nach Anspruch 1, dadurch gekennzeichnet, daß der Polyurethan-Weichschaum 5 bis 30 Gew.% eines Flammschutzmittels enthält.

7. Verfahren zum thermischen Isolieren nach Anspruch 6, dadurch gekennzeichnet, daß der Polyurethan-Schaum als Flammschutzmittel ein Cyansäurederivat, vorzugsweise Melamin, enthält.

8. Verfahren zum Thermischen Isolieren nach Anspruch 1, dadurch gekennzeichnet, daß die Kunststoff-Folie eine Dicke von 20 bis 250 /um, eine Wasserdampfdurchlässigkeit von 0 bis 25 $g/m^2.d$ und eine Reißfestigkeit von mindestens 10 $N/mm^2$ aufweist, und ihre Brennbarkeit nach DIN 4102 als normal oder schwer entflammbar eingestuft ist.

9. Verfahren zum thermischen Isolieren nach Anspruch 8, dadurch gekennzeichnet, daß die Kunststoff-Folie aus Polyäthylenterephthalat, Polyamid, thermoplastischen Polyurethan, flammfest ausgerüstetem Polyäthylen oder Polypropylen, vorzugsweise aber aus Polybutylenterephthalat besteht.

10. Verfahren zum thermischen Isolieren nach Anspruch 8, dadurch gekennzeichnet, daß die Kunststoff-Folie mit einer Aluminium-Schicht überzogen ist.

**Europäisches Patentamt**

## EUROPÄISCHER RECHERCHENBERICHT

| | EINSCHLÄGIGE DOKUMENTE | | |
|---|---|---|---|
| Kategorie | Kennzeichnung des Dokuments mit Angabe, soweit erforderlich, der maßgeblichen Teile | | betrifft Anspruch |
| X | FR - A - 2 339 030 (PIRELLI) | | 1,4,10 |
| | * Seite 2, Zeilen 28-38; Seite 3, Zeilen 1-2; Ansprüche 1,5,7 * | | |
| | -- | | |
| X | US - A - 3 381 420 (BRINK) | | 1,2,9,10 |
| | * Spalte 2, Zeilen 8-19; Spalte 3, Zeilen 24-35 * | | |
| | -- | | |
| | GB - A - 1 399 831 (GIBBS) | | 1,10 |
| | * Spalte 1, Zeilen 17-35 * | | |
| | -- | | |
| | FR - A - 2 352 242 (DES ROUSSEAUX) | | 1 |
| | * Seite 2, Zeilen 20-30; Seite 3, Zeilen 1-8 * | | |
| | -- | | |
| | FR - A - 2 124 321 (THE UPJOHN COMP.) | | 5,6 |
| | * Seite 2, Zeilen 1-33 * | | |
| | -- | | |
| | US - A - 4 110 508 (ISGUR) | | 5,6 |
| | * Spalte 1, Zeilen 26-42 * | | |
| | ---- | | |

**KLASSIFIKATION DER ANMELDUNG (Int.Cl.²)**

E 04 B 1/76
1/78

**RECHERCHIERTE SACHGEBIETE (Int. Cl.²)**

E 04 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-03-1980 | DALL'ANESE |

EPA form 1503.1 06.78